**Europäisches Patentamt**

**European Patent Office**

**Office européen des brevets**

(19)

(11) Publication number: **0 110 836**
A2

(12) # EUROPEAN PATENT APPLICATION

(21) Application number: **83830003.6**

(22) Date of filing: **11.01.83**

(51) Int. Cl.³: **F 24 J 3/02**

(30) Priority: **30.11.82 IT 2358582 U**

(43) Date of publication of application: **13.06.84**
**Bulletin 84/24**

(84) Designated Contracting States: **AT BE CH DE FR GB LI NL SE**

(71) Applicant: **INDUSTRIA MECCANICA LATERIZI S.p.A., Viale della Repubblica, 76, I-15048 Valenza Po (Alessandria) (IT)**

(72) Inventor: **Ghiselli, Pietro, Viale della Repubblica, 78, I-15048 Valenza Po (Alessandria) (IT)**

(74) Representative: **Cicogna, Franco, Ufficio Internazionale Brevetti Dott.Prof. Franco Cicogna Via Visconti di Modrone, 14/A, I-20122 Milano (IT)**

(54) **Modular solar panel structure effective to be applied on roof coverings.**

(57) The structure comprises a cup member made of glass or any other suitable transparent material, having a substantially semicylindrical shape, in the inside of which there is provided a metal material coil, provided, at the ends thereof, with suitable length portions which are 90° bent with respect to the axis of the coil, in such a way as to project, for a given length, from the cup, through the underlying roof covering layer.

**EP 0 110 836 A2**

COMPLETE DOCUMENT

## BACKGROUND OF THE INVENTION

The present invention relates to a modular solar panel structure, effective to be applied on roof coverings.

As it is well known, there are increasingly used solar panels in civil applications, generally for water heating purposes, for home applications.

The mentioned solar panels are usually formed by a pair of plate like members, couled to one another and jointly defining a path for the passing therethorugh or a thermal exchange fluid.

Those same panels, in order to exploit in a maximum degree the impinging solar energy, are mounted at a high and well exposed position and, in civil applications, they are generally mounted on the roof covering.

The presently commercially available known solar panels, are however affected by great drawbacks concerning the installation thereof, since they require to this end several special tools.

Moreover, because of the high cost and the constructional complexity of the known solar panels,

-3-

the surfaces which may be equipped with said panels
are rather small and, accordingly, the power which may
be recovered is also very reduced.

## SUMMARY OF THE INVENTION

Accordingly, the task of the present invention
is to overcome the thereinabove cited drawbacks by
providing a solar panel structure which does not
present any installation problems, as well as inter-
coupling problems to other like structures.

Within the scope of the above task, it is a
primary object of the present invention to provide
a solar panel structure which may be easily and
economically applied on existing roofs, provided
with any covering types, even of the tile construction.

Yet another object of the present invention
is to provide such a solar panel structure having a
curved shape which is effective to pick up the
solar rays with a great efficiency, from dawn to the
sunset.

Yet another object of the present invention
is to provide such a solar panel structure which has
small size, in such a way as not to be affected, even
at high temperatures, by great eepansions of the
component parts thereof.

-4+

Yet another object of the present invention is to provide such a solar panel structure which, owing to its reduced size and weight, is not affected in any substantial ways by the wind.

Yet another object of the present invention is to provide a solar panel structure which is effective to preserve the aesthetic aspect of the roof thereon it will be mounted, thereby preserving the aesthetical aspect of the overall buiding.

According to one aspect of the present invention, the thereinabove task and objects, as well as yet other objects which will become more apparent thereinafter, are achieved by a modular solar panel structure, characterized in that it comprises a cup member made of glass or any suitable transparent material, having a substantially semicylindrical shape, in the inside of which there is provided a metal material coil, provided, at the ends thereof, with suitable length portions which are 90° bent with respect to the axis of said coil, in such a way as to project, for a given length, from said cup, through the underlying roof covering layer.

BRIEF DESCRIPTION OF THE DRAWINGS

Further characteristics and advantages
of the solar panel structure according to the
present invention will become more apparent hereinafter from the following detailed description of a
preferred embodiment thereof, being illustrated, by way
of an indicative but not limitative example, in the
accompanying drawings, where:

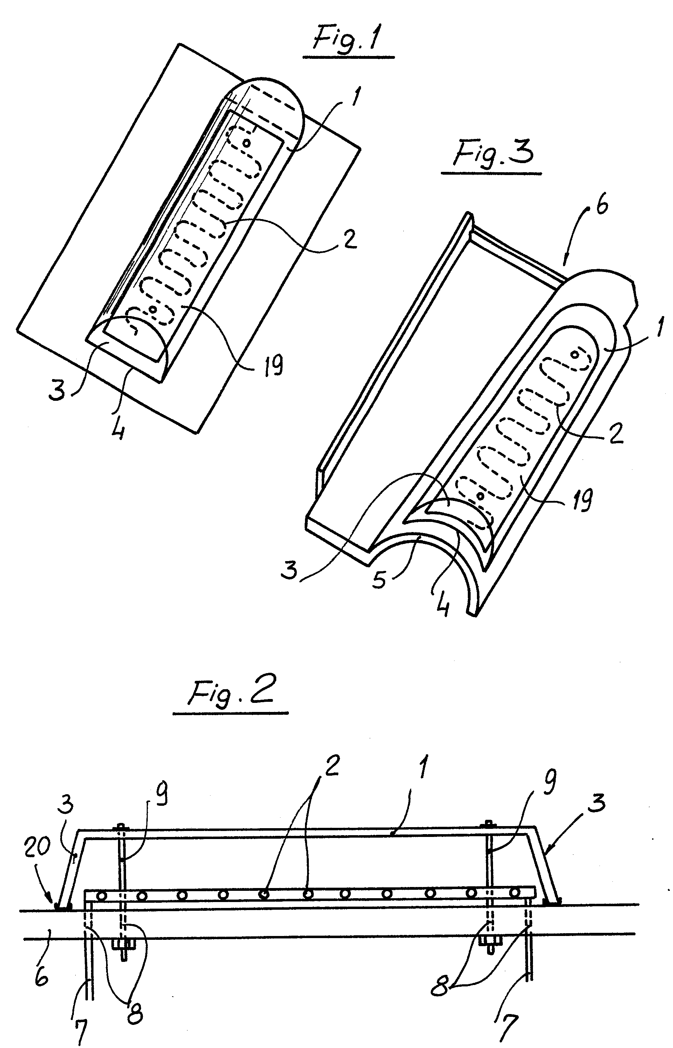

fig.1 is a perspective view illustrating
the solar panel structure according to the present
invention;

fig.2 is a longitudinal cross-section of
that same structure, as mounted on a generic supporting
structure;

fig.3 is a perspective view illustrating the
subject solar panel structure as applied on a tile or
the so-called Portoguese type;

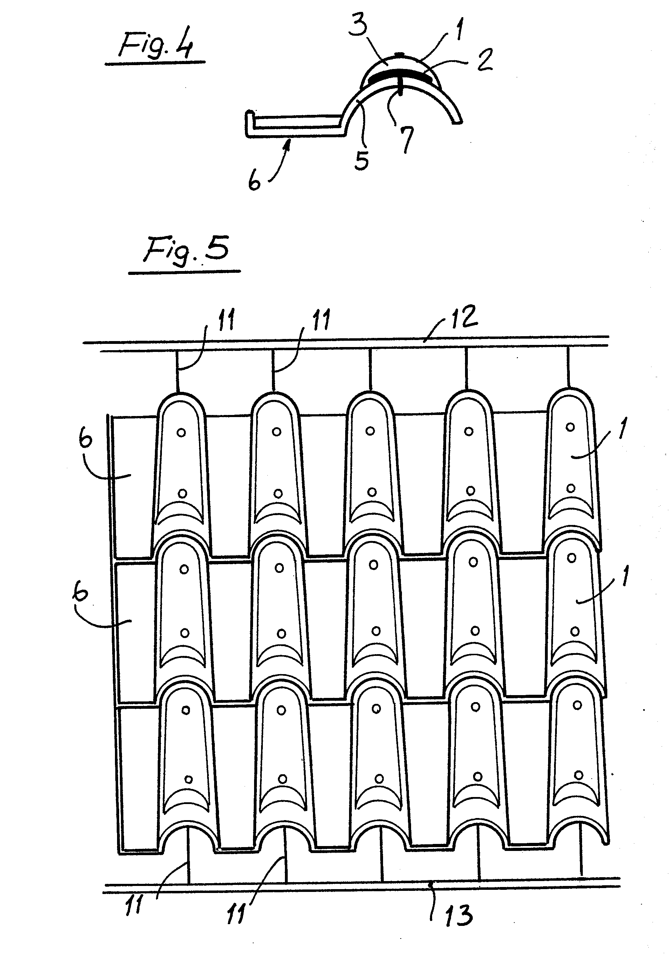

fig.4 is a cross-section of that tile, provided
with the solar panel structure according to the
present invention;

fig.5 illustrates a roof portion the covering
whereof consists or a plurality of the mentioned
equipped tiles;

and

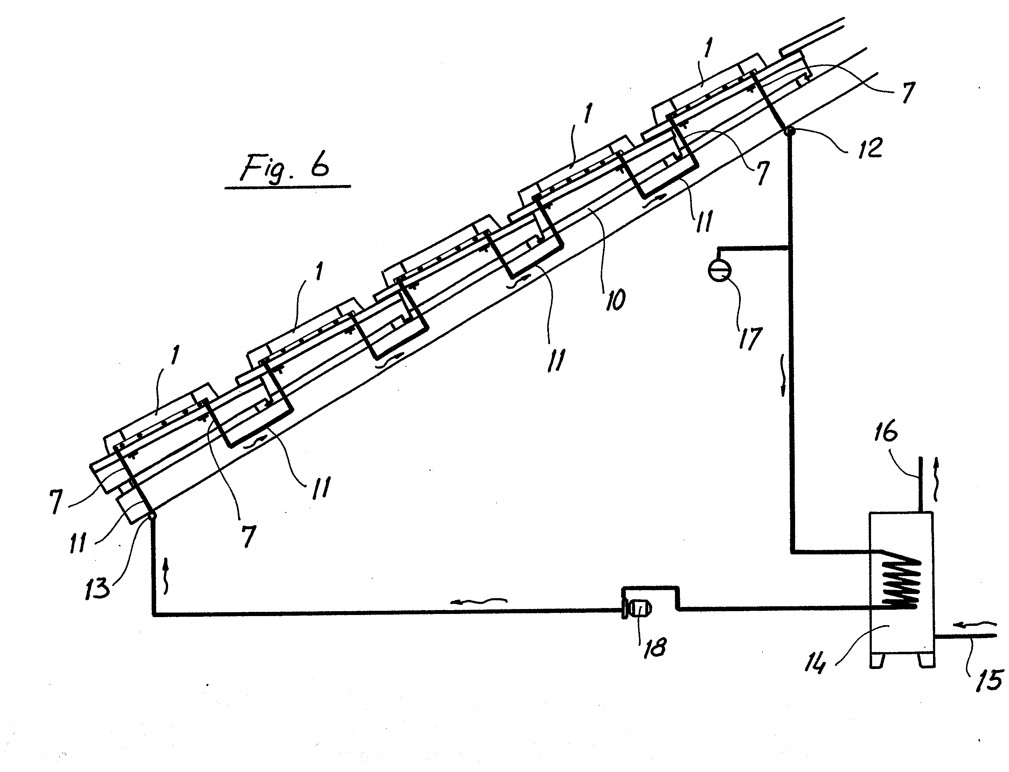

fig.6 illustrates a partial cross-section of a roof, to the tiles whereof has been applied the subject solar panel structure.

## DESCRIPTION OF THE PREFERRED EMBODIMENT

With reference to the numbers references of the several figures of the accompanying drawings, the modular solar panel structure according to the present invention comprises a cup member 1, made of glass or any other suitable transparent material enclosing a metal coil 2, preferably a copper coil.

The mentioned cup member has a substantially semicylindrical shape defined, at the two ends thereof, by corresponding walls 3 provided, at the bottom thereof, with a perimetrical line 4 effective to mate the profile 5 of the covering elements 6, thereon the structure is to be applied.

Moreover, the edge of that same cup member 1 is provided, along the overall extension thereof, with a tightness gasket 20.

The mentioned metal coil, in particular, is provided, at the ends thereof, with a downwardly directed small pipe 7, having a sufficient length to protrude, for a given portion, from said covering element thickness.

-7-

In actual practice,after having formed,at suitable positions,through holes 8 in said covering elements,into two of said holes there are inserted said small pipes 7.

The remaining holes 8 are effective,jointly to corresponding holes,as formed in the cup member, to affix the latter,by means of small bolts 9,to the corresponding roof covering element.

The mentioned small pipes 7 substantially extend under the roof structure 10 thereby allowing for the possibility of series or parralel coupling a plurality or coil 2,by using flexible silicone tubular members 11,which are pressure fitted on the ends of said small pipes 7.

Moreover,said coils 2 may be coupled,by those same means,to an outlet manifold 12 and an inlet manifold 13,communicating with a collecting tank, preferably consisting of a heat exchanger 14,thereinto system water is introduced from the duct 15 and therefrom heated water is taken through the duct 16.

Moreover it is provided that,on the system communicating to one another the mentioned outlet and inlet ducts,be mounted an expansion tank 17 and a

motor 18, controlled by a thermostat, for circulating
the diathermal fluid.

Advantageously, the coil 2 may be located
on a supporting plate 19, suitably blackened, effective
to favour the absorption of solar energy, to be
successively transmitted to said coil.

It should moreover be pointed out that
the thus constructed solar panel structure may
be preliminarily located, in a plurality of samples,
or units, coupled to one another, on a generic
supporting structure effective to be applied on any
smooth roofs, even of the tile type.

From the above disclosure and the observavion
of the several figures of the accompanying drawings
the great functionality and use facility characteriz-
ing the modular solar panel structure according to
the present invention will be self-evident.

## C L A I M S

1- A modular solar panel structure, characterized in that it comprises a cup member made of glass or any other suitable transparent material, having a substantially semicylindrical shape, in the inside of which there is provided a metal material coil, provided, at the ends thereof, with suitable length portions which are 90° bent with respect to the axis of said coil, in such a way as to project, for a given length, from said cup, through the underlying roof covering layer.

2- A solar panel structure, according to the preceding claim, characterized in that said cup is defined, at the two ends thereof, by corresponding walls provided, at the bottom thereof, with a perimetrical line effective to mate the profile of the covering elements thereon it is to be applied, the edge of said cup being provided with a tightness gasket.

3- A solar panel structure, according to claim 1, characterized in that said portions or small pipes, extending under said roof structure, are effective to afford the possibility of series or parallel coupling a plurality of said coils, by using flexible silicone tubular members effective to be fitted by pressure on the ends of said small pipes, said coils being effective to be coupled, by the same means, to an outlet manifold and an inlet manifold for the diathermal fluid, communicating with a collecting tank, which preferably consists of a heat exchanger.

4- A solar panel structure, according to one or more of the preceding claims, characterized in that on the system communicating said outlet and inlet manifolds there are provided an expansion tank and a motor, controlled by a thermostat which in turn controls a pump for circulating the diathermal fluid.

5- A solar panel structure, according to one or more of the preceding claims, characterized in that said coil is located on a suitably blackened supporting plate effective to favour the absorption of solar power, to be successively transmitted to said coil.

6- A solar panel structure, according to the preceding claims, characterized in that it is effective to be located, in plural samples, couled to one another, on a supporting structure effective to be applied on any smooth roofs.

7- A solar panel structure, according to the preceding

claims and substantially as broadly described and
illustrated in the preceding disclosure and in the
figures of the accompanying drawings, constituting
an integrating part of the instant patent application,
characterized in that said structure is effective
to be applied on conventional tiles or partially
replace modular elements of tile roofs, or of roofs of
any types.

Fig.1

Fig.3

Fig.2

_Fig.4_

_Fig.5_

Fig. 6